# EUROPEAN PATENT SPECIFICATION

(11) **EP 1 238 824 B1**
(45) Date of publication and mention of the grant of the patent: **29.12.2004**
(21) Application number: 01830152.3
(22) Date of filing: 06.03.2001
(51) Int. Cl.: B60B 3/00, B60B 19/00, B60C 3/02, B60C 3/06, B60C 9/18

(54) **An improved wheel for agricultural use**
Verbessertes Rad für landwirtschaftliche Verwendung
Roue améliorée pour usage agricole

(43) Date of publication of application: 11.09.2002
(73) Proprietor: M.B.F. S.r.l., 42025 Cavriago, Reggio Emilia (IT)
(72) Inventor: Magnani, Egidio, 42025 Cavriago, Reggio Emilia (IT)
(74) Representative: Gotra, Stefano

(56) References cited:
- US-A- 3 450 182
- US-A- 4 408 551
- US-A- 4 733 730
- US-A- 5 533 793

## Description

The invention is usefully applied in instruments for sowing, especially for direct-sower vehicles.

The wheels are actually multifunctional, having characteristics which considerably distinguish them from normal vehicle wheels. The wheels require specific research and construction in order to solve problems which do not exist in common wheels. They are combined with discs which create a groove in the earth which will then receive seeds. Apart from keeping the sowing depth constant and supporting the tools doing the sowing as they move along the field being sown, the wheels can also rotate and translate with respect to the discs, thus having a cleaning action thereon, keeping earth out from between disc and wheel, as well as closing the groove (opened by the disc) containing the seeds. All of these movements, as well as the devices causing them, are of known type and are therefore not further described or illustrated inasmuch as they do not relate to the specific scope of the present invention.

An example of a wheel for a sowing machine of known type is the wheel described in US patent US 5533793 A, which discloses all features of the preamble of claim 1.

These wheels are provided with special tyres, mounted on the rim of the wheel, which exhibit a peripheral crown, or lip, which is set in contact with and drags against the disc which is arranged in correspondence to the internal part of the wheel. The crown of the tyre thus insulates the internal recess of the rim from the outside environment, preventing entry of earth between disc and rim.

To favour detachment of earth from the tyre, thus ensuring a constant depth in seed placement in the groove, the tyre must be especially flexible so as to deform on contact with the earth and thus free itself, during its elastic return stage, of any earth still attached. This necessary tyre elasticity sometimes causes the peripheral crown to detach from the disc, with an ensuing undesired entry of earth into the internal part of the wheel rim.

A further possible drawback of known wheels is the fact that earth can stick to the external part of the wheel and make movement difficult and imprecise. Obviously the above-described drawbacks more easily occur where the earth being sown is soft or very damp.

The main aim of the present invention is to make available an agricultural wheel which guarantees perfect cleaning of the disc and prevents formation of lumps of earth both inside and outside the rim and on the tyre, i.e. prevents fouling of the tyre and the wheel.

An advantage of the present invention is that it provides a wheel which enables friction between disc and tyre to be reduced, while at the same time guaranteeing the seal between these two elements.

A further advantage of the invention is that it provides a wheel which is easy to mount and remove.

These aims and advantages and others besides are all attained by the invention as it is characterised in the claims that follow.

Further characteristics and advantages of the present invention will better emerge from the detailed description that follows of some preferred but non-exclusive embodiments of the invention, illustrated purely by way of nonlimiting example in the accompanying figures of the drawings, in which:
figure 1 is a vertical-elevation section of a pair of the wheels of the invention, assembled to the respective discs;
figure 2 is a vertical-elevation section of a first type of the wheel of the invention;
figure 3 is a vertical-elevation section of a second type of the wheel of the invention;
figure 4 shows various types of sections of tyre which can be used by the wheels of the invention;
figure 5 shows various types of sections of the tyre lips that can be used by the wheels of the invention.

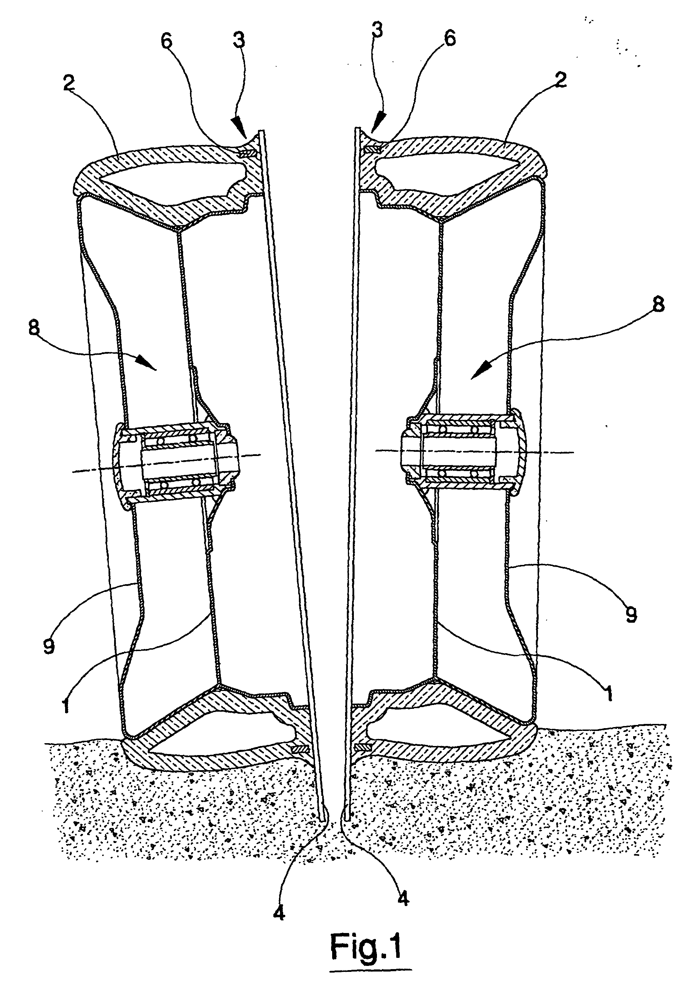

The wheel for agriculture of the invention is used in tools for sowing, in particular in direct-sowing machines, either pneumatic or not; these machines which in general are equipped with a number of wheel-couples of the type illustrated in figure 1, are of known type and are not illustrated in the drawings.

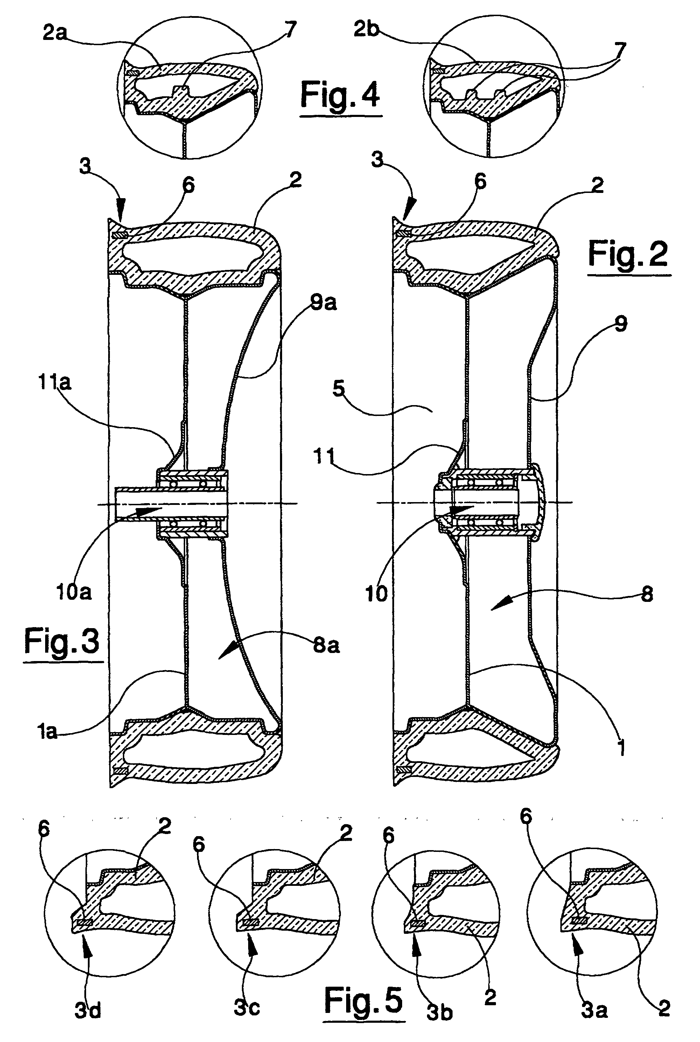

Figures 2 and 3 illustrate two possible embodiments of the wheels of the invention; in the two figures the corresponding elements are denoted by the same numbers and where the forms of the parts vary, the suffix "a" is used to distinguish them.

The wheel of the invention comprises a rim 1, 1a, which supports a tyre 2 provided with a lip, or peripheral crown 3, which is set in contact with a disc 4 arranged at the internal part of the tyre. Contact between the crown 3 and the disc 4 causes the internal recess 5 of the rim to be insulated from the outside environment, so as to prevent entry of earth into the recess 5. Note that the tyre section, as illustrated in figure 4 which shows tyre sections 2a and 2b, can internally exhibit, in its internal part which is in contact with the rim, one or more projections 7 facing internally of the tyre. The function of these projections 7 is to limit radial deformation of the tyre, while conserving its elasticity. Note also that the tyre internal part could be air-filled or could instead be filled with an expanded material which would not limit its elasticity. The tyre comprises a stiffening element 6 which is arranged internally of the tyre at the position of the peripheral crown 3, with the aim of reducing flexional deformation. The stiffening element 6 is a metal, plastic or other material ring insert, which can have, apart from the rectangular section illustrated in the figure, other sections too, for example square, circular, etc. Alternatively to a ring-insert, the stiffening element 6 can be made of discontinuous elements, such as small bars, spheres or the like, internally inserted in the tyre along the peripheral crown 3. These alternatives, however, do not form part of the invention.

The presence of the stiffening element 6 greatly limits the flexion of the peripheral crown which, when the tyre rests on the earth, would tend to bend the crown externalwise of the wheel and cause a possible detachment of the disc.

The presence of the stiffening element means that special shaping can be made of the peripheral crown, like those illustrated in figure 5 and denoted by numbers 3a, 3b, 3c and 3d. These special mouldings enable a reduction in the contact portion between the peripheral crown and the disc 4, which in turn reduces the friction between the crown and disc, favouring relative movement between these two parts without risking at the same time any detachment of the two thanks to the greater rigidity given by the presence of the stiffening element 6.

The wheel rim, illustrated in figures 2 and 3 in two embodiments 1 and 1a, comprises a closed structure 8, 8a, facing the external part of the wheel and provided with a completely smooth external wall 9, 9a. The closed structure 8, 8a, is made of a single body realised in sheet steel, generally made by welding two specially-shaped sheets. Obviously the shape of the single body can be different from the one illustrated in the figures of the drawings; the important point is that the body should not exhibit openings towards the outside and that it should not exhibit irregularities in the external surface, so that there is no possibility that the earth, during the seeding operations, can stick to the wheel or penetrate inside it.

The closed structure 8, 8a, is further provided with a central cylindrical through-cavity 10, 10a, predisposed to house the bearing and rotation axis of the wheel. The closed structure 8, 8a, further comprises a striker 11, 1a, also preferably made of sheet steel and welded to the rim, which is arranged concentrically of the cavity 10, 10a and the internal part of the rim. The wheel bearing strikes against the striker 11, 11a. In this way the wheel can be removed from the outside with no special complications.

A cap 12 can be used to make the wheel even more impervious to mud. The cap 12 is inserted in the cavity 10, 10a of the external part of the rim and closes off the cavity 10, 10a.

The walls of the cavity 10, 10a do not project from the smooth external wall 9, 9a of the rim, so that no possible points of attachment for mud are offered. Any greater length of the cavity with respect to the breadth of the closed structure 8, 8a, necessary for housing the bearing, will be obtained by making the wall of the cavity project towards the inside of the wheel.

Obviously the shapes and sizes of the striker and the cap are not rigidly determined by the bearing; the length of the cavity is also not rigidly determined as long as it is compatible with the bearing it will house.

## Claims

1. An improved wheel for agricultural use, of a type to be used in a sowing machine and comprising a rim (1, 1a) which supports a tyre (2, 2a, 2b) provided with a peripheral crown (3, 3a, 3b, 3c, 3d) which is placed in contact with and drags against a disc (4) arranged at an internal part of the tyre of the wheel and insulates an internal recess (5) of the rim (1, 1a) from the outside environment, ***characterised in that*** it comprises a stiffening element (6) arranged internally of the tyre in the peripheral crown (3, 3a, 3b, 3c, 3d) so as to limit flexional deformation of the tyre. peripheral crown which tends to bend the crown externalwise of the wheel when the tyre rests on the earth, and that the stiffening element (6) is a ring inserted into the tyre.

2. The wheel of claim 1, **characterised in that** the stiffening element (6) is made of discontinuous elements inserted along the peripheral crown (3, 3a, 3b, 3c, 3d)

3. The wheel of claim 1, **characterised in that** the peripheral crown (3, 3a, 3b, 3c, 3d) is shaped such that only a reduced portion thereof is in contact with the disc (4).

4. The wheel of claim 1, **characterised in that** the tyre (2, 2a, 2b) comprises at least one projection (7) made in an internal part of the tyre (2, 2a, 2b) and which is in contact with the rim (1, 1a) and which faces inwardly of the tyre (2, 2a, 2b).

5. The wheel of claim 1, **characterised in that** the rim (1, 1a) comprises a closed structure (8, 8a), facing towards an external part of the wheel, which is provided with a smooth external wall (9, 9a) and a central cylindrical through-cavity (10, 10a), said closed structure (8, 8a) being made using a single body.

6. The wheel of claim 5, **characterised in that** said single body, of which is made said closed structure (8, 8a), is made of sheet steel.

7. The wheel of claim 6, **characterised in that** the closed structure (8, 8a) comprises a striker (11, 1a) arranged concentrically of the cavity (10, 10a) at the internal side of the rim (1, 1a).

8. The wheel of claim 6, **characterised in that** it comprises a cap (12) which can be inserted in the cavity (10, 10a) at the external side of the rim (1, 1a), having the aim of closing the cavity (10, 10a).

9. The wheel of claim 6, **characterised in that** a wall of the cavity (10, 10a) does not project from the smooth external side (9, 9a) of the rim (1, 1a).

## Patentansprüche

1. Verbessertes Rad für landwirtschaftliche Verwendung, von einem Typ zur Benutzung bei einer Sämaschine, und enthaltend eine Felge (1, 1a), welche einen Reifen (2, 2a, 2b) trägt, der mit einem umlaufenden Kranz (3, 3a, 3b, 3c, 3d) versehen ist, welcher mit einer Scheibe (4) im Kontakt ist und an dieser schleift, angeordnet an einem inneren Teil des Reifens des Rades, und der eine interne Vertiefung (5) der Felge (1, 1a) von dem Aussenbereich isoliert, **dadurch gekennzeichnet, dass** es ein Versteifungselement (6) enthält, angeordnet im Inneren des Reifens in dem umlaufenden Kranz (3, 3a, 3b, 3c, 3d), so dass die Biegeverformungen des umlaufenden Kranzes begrenzt werden, welche dazu neigen, den Kranz nach ausserhalb des Rades zu biegen, wenn der Reifen auf dem Boden aufliegt, und dass das Versteifungselement (6) ein in den Reifen eingesetzter Ring ist.

2. Rad nach Patentanspruch 1, **dadurch gekennzeichnet, dass** das Versteifungselement (6) aus unterbrochenen Elementen hergestellt ist, eingesetzt entlang dem umlaufenden Kranz (3, 3a, 3b, 3c, 3d).

3. Rad nach Patentanspruch 1, **dadurch gekennzeichnet, dass** der umlaufende Kranz (3, 3a, 3b, 3c, 3d) so geformt ist, dass nur ein reduzierter Abschnitt desselben im Kontakt mit der Scheibe (4) ist.

4. Rad nach Patentanspruch 1, **dadurch gekennzeichnet, dass** der Reifen (2, 2a, 2b) wenigstens einen Vorsprung (7) enthält, hergestellt an einem internen Teil des Reifens (2, 2a, 2b), der sich im Kontakt mit der Felge (1, 1a) befindet, und welcher dem Innenraum des Reifens (2, 2a, 2b) zugewandt ist.

5. Rad nach Patentanspruch 1, **dadurch gekennzeichnet, dass** die Felge (1, 1a) eine geschlossene Struktur (8, 8a) enthält, die einer Aussenseite des Rades zugewandt ist, versehen mit einer glatten äusseren Wand (9, 9a) und einen mittleren, zylindrischen, durchgehenden Hohlraum (10, 10a), wobei die genannte geschlossene Struktur (8, 8a) unter Verwendung eines einzigen Körpers hergestellt ist.

6. Rad nach Patentanspruch 5, **dadurch gekennzeichnet, dass** der genannte einzige Körper, aus welchem die genannte geschlossene Struktur (8, 8a) hergestellt ist, aus Stahlblech besteht.

7. Rad nach Patentanspruch 6, **dadurch gekennzeichnet, dass** die genannte geschlossene Struktur (8, 8a) einen Anschlag (11, 11a) enthält, angeordnet konzentrisch zu dem Hohlraum (10, 10a) im inneren Teil der Felge (1, 1a).

8. Rad nach Patentanspruch 6, **dadurch gekennzeichnet, dass** es eine Kappe (12) enthält, welche in den Hohlraum (10, 10a) an der Aussenseite der Felge (1, 1a) eingesetzt werden kann und den Zweck hat, den Hohlraum (10, 10a) zu verschliessen.

9. Rad nach Patentanspruch 6, **dadurch gekennzeichnet, dass** die Wand des Hohlraums (10, 10a) nicht aus der glatten äusseren Wand (9, 9a) der Felge (1, 1a) hervorsteht.

## Revendications

1. Roue améliorée pour usage agricole, du type utilisé dans une machine de semage et comprenant une jante (1, 1a) qui supporte un pneu (2, 2a, 2b) pourvu d'une couronne périphérique (3, 3a, 3b, 3c, 3d) mise en contact et trainant contre un disque (4) disposé sur une partie interne du pneu de la roue et isole un renfoncement interne (5) de la jante (1, 1a) de l'environnement externe, **caractérisée en ce qu'**elle comprend un élément de rigidification (6) disposé à l'intérieur du pneu dans la couronne périphérique (3, 3a, 3b, 3c, 3d) de manière à limiter la déformation en flexion de la couronne périphérique qui tend à fléchir cette dernière vers l'extérieur de la roue quand le penu repose sur le sol, et **en ce que** l'élément de rigidification (6) est un anneau inséré dans le pneu.

2. Roue selon la revendication 1, **caractérisée en ce que** l'élément de rigidification (6) est réalisé au moyen d'éléments discontinus insérés le long de la courone périphérique (3, 3a, 3b, 3c, 3d).

3. Roue selon la revendication 1, **caractérisée en ce que** la courone périphérique (3, 3a, 3b, 3c, 3d) est conformée de manière à ce qu'une partie seulement réduite de cette dernière soit en contact avec le disque (4).

4. Roue selon la revendication 1, **caractérisée en ce que** le pneu (2, 2a, 2b) comprend au moins une saillie (7) formée dans une partie interne du pneu (2, 2a, 2b), en contact avec la jante (1, 1a) et orientée vers l'intérieur du pneu (2, 2a, 2b).

5. Roue selon la revendication 1, **caractérisée en ce que** la jante (1, 1a) comprend une structure fermée (8, 8a), orientée vers une partie externe de la roue, pourvue d'une paroi externe lisse (9, 9a) et une cavité cylindrique passante centrale (10, 10a), ladite structure fermée (8, 8a) étant réalisée en utilisant un corps unique.

6. Roue selon la revendication 5, **caractérisée en ce que** ledit corps unique, dont est constituée ladite structure fermée (8, 8a), est constitué d'une feuille d'acier.

7. Roue selon la revendication 6, **caractérisée en ce que** la structure fermée (8, 8a) comprend une butée (11, 11a) disposée de manière concentrique à la cavité (10, 10a) sur la surface interne de la jante (1, 1a).

8. Roue selon la revendication 6, **caractérisée en ce qu'**elle comprend un bouchon (12) qui peut etre inséré dans la cavité (10, 10a) sur le côté externe de la jante (1, 1a), ayant pour but de fermer la cavité (10, 10a).

9. Roue selon la revendication 6, **caractérisée en ce qu'**une paroi de la cavité (10, 10a) n'est pas saillante par rapport au côté externe lisse (9, 9a) de la jante (1, 1a).
